# EUROPÄISCHE PATENTSCHRIFT

(11) **EP 0 980 712 B1**
(45) Veröffentlichungstag und Bekanntmachung des Hinweises auf die Patenterteilung: **29.09.2004**
(21) Anmeldenummer: 98113143.6
(22) Anmeldetag: 15.07.1998
(51) Int. Cl.: B03B 5/28, B03B 9/06, B29B 17/02

(54) **Verfahren und Vorrichtung zum Abtrennen von saug- und schwimmfähigem Material aus Stoffgemischen mittels Schwimm-Sink-Trennung**
Process and device for separating absorbent and buoyant material from substance mixtures by sink-float-separation
Procédé et dispositif pour séparer un matériau absorbant et flottant de mélanges de substances par le procédé des plongeants et flottants

(43) Veröffentlichungstag der Anmeldung: 23.02.2000
(73) Patentinhaber: Hewlett-Packard Company, A Delaware Corporation, Palo Alto, CA 94304 (US); BlfA GmbH, 86167 Augsburg (DE)
(72) Erfinder: Hartleitner, Bernhard, Dipl.-Ing. (FH), 86415 Mering (DE); Kreibe, Siegfried, Dr., 81245 München (DE); Pitschke, Thorsten, Dipl.-Ing., 86465 Welden (DE); Wagner, Josef, Dipl.-Ing., 85051 Ingolstadt (DE); Deisser, Xaver, 86678 Ehingen (DE)
(74) Vertreter: Schoppe, Fritz, Dipl.-Ing.

(56) Entgegenhaltungen:
- DE-A- 3 717 839
- DE-A- 3 934 874
- DE-C- 19 507 703
- FR-A- 2 500 431
- US-A- 3 284 282
- US-A- 4 458 846
- PATENT ABSTRACTS OF JAPAN vol. 1, no. 147, 28. November 1977 & JP 52 090158 A (MATSUSHITA ELECTRIC WORKS LTD), 28. Juli 1977
- PATENT ABSTRACTS OF JAPAN vol. 9, no. 286, 13. November 1985 & JP 60 127111 A (SUDA SEISAKUSHO KK), 6. Juli 1985

## Beschreibung

Die Erfindung betrifft ein Verfahren und eine Vorrichtung zum Abtrennen von saug-und schwimmfähigem Material aus Stoffgemischen mittels Schwimm-Sink-Trennung gemäß den Ansprüchen 1 und 10.

Aus dem Stand der Technik sind Schwimm-Sink-Trennvorrichtungen bekannt, welche vor allem im Bereich der Abtrennung von Kunststoffen eingesetzt werden. Funktionsprinzip ist die Trennung eines Stoffgemisches in eine Schwimmfraktion und in eine Sinkfraktion. Konventionelle Schwimm-Sink-Trennvorrichtungen arbeiten zur Gewährleistung eines effizienten Trennvorgangs mit einer gründlichen Durchmischung und Benetzung des zu separierenden Feststoffgemischs und einer langen Verweilzeit im Separator. Hierzu wird das Material meist unter intensiver Durchmischung in das Trennmedium, meist Wasser, eingebracht und durch entsprechende Vorrichtungen wiederholt unter die Oberfläche des Trennmediums gedrückt. Durch hinreichend große Setzbecken und eine hohe Verweilzeit wird erreicht, daß sich die Sinkfraktion möglichst vollständig von der Schwimmfraktion trennen kann. Diese Vorgehensweise hat den Nachteil, daß es sich für eine Abtrennung von saug- und schwimmfähigen Materialien aus einem Stoffgemisch nicht eignet, da sich das ansonsten schwimmfähige Material wegen der langen Verweilzeit im Trennmedium vollsaugt und zusammen mit der schwereren Sinkfraktion absinkt.

Aus der gattungsbildenden DE 195 07 703 ist ein Verfahren und eine Vorrichtung zum Trennen von Stoffgemischen mittels Schwimm-Sink-Scheidung bekannt, bei welchen durch relativ weit unter der Oberfläche des Trennmediums angeordnete Düsen eine zur Wasseroberfläche hin gerichtete Strömung erzeugt wird, um unter die Oberfläche des Trennmediums abgesunkenes saug- und schwimmfähiges Material, wie z.B. Papier, an die Oberfläche des Trennmediums zurückzutreiben und es dort mittels einer Austragsvorrichtung aus der Vorrichtung auszubringen. Diese Vorgehensweise hat den Nachteil, daß nicht verhindert wird, daß sich saugfähiges Material mit dem Trennmedium vollsaugen und dadurch absinken kann. Insbesondere behindert die zur Oberfläche des Trennmediums hin gerichtete Strömung, daß die sich gegenläufig bewegende Sinkfraktion ungestört nach unten absinken kann. Darüber hinaus ist nach der Abtrennung der Schwimmfraktion ein zusätzlicher Schritt notwendig, um das von der Schwimmfraktion aufgesaugte Trennmedium wieder zu entfernen.

Die US-A-4,458,846 beschreibt eine Vorrichtung und ein Verfahren zum Wiedergewinnen von Holz aus Abfall. Das Holz wird aus dem Abfall in einem Prozeß wiedergewonnen, der alternativ in einem Paar von seitlich zueinander angeordneten, mit Wasser gefüllten Tanks durchgeführt wird. Jeder Tank umfaßt einen geneigten Boden, der ein tiefes Ende aufweist, an dem sich absinkendes Material ansammelt, sowie ein flaches Ende. Wasserströmungen entlang zwei benachbarter Seiten jedes Tanks erzeugen einen Oberflächenwasserfluß und treiben das Holz in Richtung einer Ecke des flachen Endes, wo sich das Holz sammelt und entfernt wird.

Die FR 2500431 A beschreibt eine Vorrichtung um Material, das auf einer Flüssigkeitsoberfläche in einem Tank enthalten ist, zu entfernen. Hierfür ist eine Düse vorgesehen, welche von unterhalb der Wasseroberfläche in Richtung einer Auffangeinrichtung gerichtet ist und einen Strahl erzeugt, mittels dem auf der Flüssigkeit schwimmendes Material in die Aufnahmeeinrichtung bewegt wird.

Hiervon ausgehend ist es die Aufgabe der vorliegenden Erfindung, ein Verfahren und eine Vorrichtung zum Abtrennen von saug-und schwimmfähigem Material aus Stoffgemischen mittels Schwimm-Sink-Trennung bereitzustellen, bei welchen ein Vollsaugen des abzutrennenden saugfähigen Materials mit dem Trennmedium weitgehend vermieden wird.

Diese Aufgabe wird gemäß der Erfindung durch eine Vorrichtung mit den Merkmalen von Anspruch 1 und durch ein Verfahren mit den Merkmalen von Anspruch 10 gelöst.

Die Maßnahmen ergeben in vorteilhafter Weise, daß sich das saugfähige Material während der kurzen Verweildauer im Trennmedium nicht oder nur unwesentlich mit dem Trennmedium vollsaugen und absinken kann. Somit kann es auf einfache Weise von der Oberfläche des Trennmediums ausgetragen werden. Da das saugfähige Material schnell von der Aufgabestelle entfernt wird, wird darüber hinaus vermieden, daß es durch nachfolgendes Stoffgemisch unter die Oberfläche des Trennmediums gedrückt oder die Sinkfraktion durch an der Aufgabestelle verbleibendes saugfähiges Material am Absinken gehindert wird.

Das zur Abtrennung von saug- und schwimmfähigem Material entwickelte Verfahren und die entsprechende Vorrichtung werden vorzugsweise zur Abtrennung von offenporigen Kunststoffschäumen eingesetzt. Es können jedoch auch geschlossenporige Kunststoffschäume oder andere saug- und schwimmfähige Materialien mit einer Dichte kleiner als die des Trennmediums von anderen Stoffen separiert werden. Wenn im Falle von offenporigen Schäumen ein nennenswerter Anteil der Poren mit Luft gefüllt ist, schwimmen die Schaumpartikel auf der Oberfläche des Trennmediums. Häufig ist dies nach der Zerkleinerung der Schäume der Fall.

Vorteilhafte Ausgestaltungen und zweckmäßige Fortbildungen der übergeordneten Maßnahmen sind in den Unteransprüchen angegeben. Wenn das saug-und schwimmfähige Material bereits vor der Schwimm-Sink-Trennung mit einer Flüssigkeit, z.B. Tinte, vollgesogen ist, kann eine derartige besonders vorteilhafte Ausgestaltung darin bestehen, daß als Vorbehandlung für die Schwimm-Sink-Trennung ein Teil der Flüssigkeit z.B. durch eine Vibrations-Siebrinne abgetrennt wird. Auf diese Weise wird auch saugfähiges Material, welches in hohem Maße mit Flüssigkeit vollgesogen ist, für eine nachfolgende Schwimm-Sink-Trennung schwimmfähig gemacht.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand den Zeichnungen näher entnehmbar.

In den Zeichnungen zeigen:
- **Fig.1**: eine schematische Darstellung einer Seitenansicht der erfindungsgemäßen Vorrichtung in einer bevorzugten Ausführungsform;
- **Fig.2**: eine schematische Darstellung einer Draufsicht der erfindungsgemäßen Vorrichtung in der bevorzugten Ausführungsform;
- **Fig.3**: eine schematische Darstellung einer Schwimm-Sink-TrennVorrichtung der erfindungsgemäßen Vorrichtung in einer zweiten Ausführungsform; und
- **Fig.4**: eine schematische Darstellung einer Schwimm-Sink-TrennVorrichtung der erfindungsgemäßen Vorrichtung in einer dritten Ausführungsform.

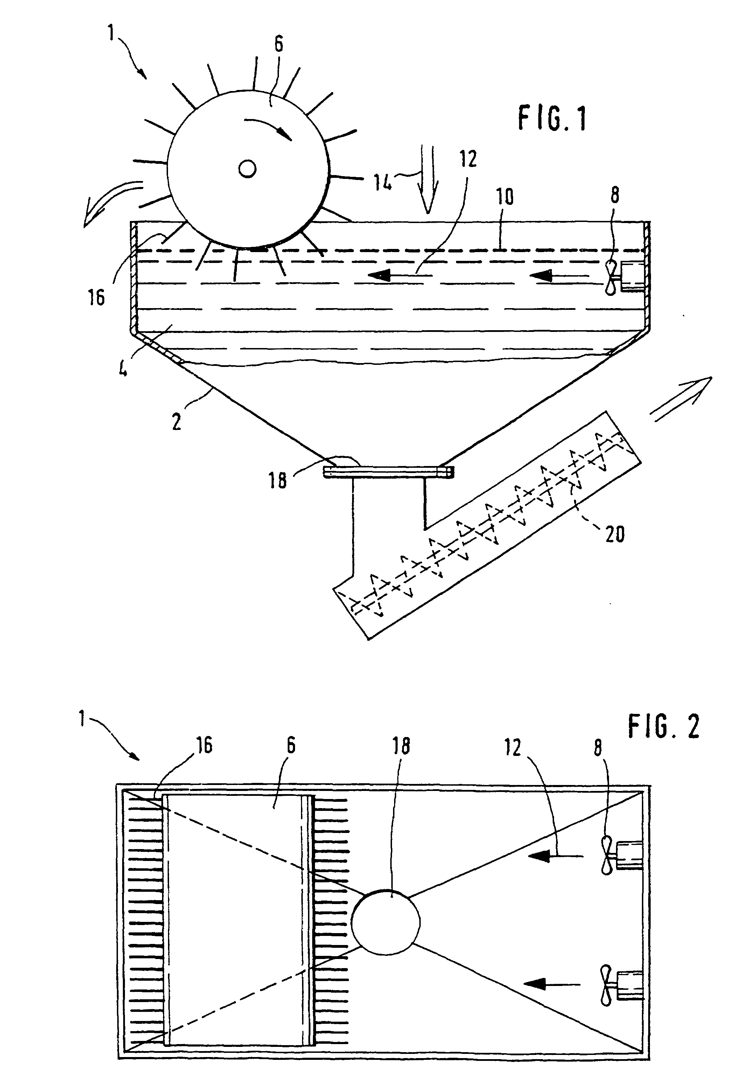

Gemäß einer bevorzugten Ausführungsform dient die in Fig.1 dargestellte Vorrichtung zum Abtrennen von Kunststoff-Schäumen aus zerkleinerten Tintenpatronen. Tintenpatronen finden heutzutage in Druckern, Faxgeräten etc. als Einweg-Patronen Verwendung und fallen in großem Umfang als Abfall an, wenn ihr Tintenvorrat aufgebraucht ist. Eine solche Tintenpatrone enthält einen saugfähigen und leicht verformbaren Kunststoff-Schaum, welcher von einem Tintenpatronengehäuse umschlossen ist. Das saugfähige schaumartige Material dient dazu, die Tinte aufzusaugen und innerhalb der Tintenpatrone zu binden, um ein Hin- und Herschwappen der Tinte zu vermeiden, wenn die Tintenpatrone zusammen mit dem Druckkopf innerhalb des Druckers mit hoher Geschwindigkeit bewegt wird. Insbesondere dieser Kunststoff-Schaum bindet selbst bei einer aufgebrauchten Tintenpatrone noch einen gewissen Anteil an Resttinte. Um diese Resttinte aus den Kunststoff-Schäumen zumindest teilweise zu entfernen, werden gemäß der bevorzugten Ausführungsform die Tintenpatronen in einer Mühle zunächst grobzerkleinert, um die Kunststoffschäume freizulegen, welche anschließend zusammen mit den anderen Tintenpatronenpartikeln in eine in Fig.1 nicht dargestellte Vibrations-Siebrinne gegeben werden, damit Tinte von ihnen abtropfen kann.

Die aus zerkleinerten Tintenpatronen-Partikeln bestehende Grobfraktion wird im Anschluß daran in die in Fig.1 dargestellte Schwimm-Sink-Trennvorrichtung 1 befördert, welche einen trichterförmigen Trennbehälter 2 aufweist, in welchem als Trennmedium 4 vorzugsweise Wasser gespeichert ist. Die Schwimm-Sink-Trennvorrichtung 1 weist am Rand des Trennbehälters 2 ein in das Wasser teilweise eingetauchtes und rotatorisch angetriebenes Rechenrad 6 zum Austrag der Schwimmfraktion auf. Motorisch angetriebene Propeller 8, welche am diametral gegenüberliegenden Rand des Trennbehälters 2 und dicht unter der Wasseroberfläche 10 angeordnet sind, erzeugen eine Oberflächenströmung 12 in Richtung des Rechenrades 6, wobei die Oberflächenströmung 12 nur in den oberen Schichten des Trennmediums 4 erzeugt wird und vorzugsweise parallel zur Wasseroberfläche 10 ist. Werden nun die grobzerkleinerten Tintenpatronen, welche unter anderem schwimmfähige Kunststoff-Schäume und schwerere Kunststoffpartikel enthalten, an einer Aufgabestelle 14 zwischen den Propellern 8 und dem Rechenrad 6 auf die Wasseroberfläche 10 aufgegeben, so werden die schwimmfähigen Kunststoff-Schäume von der auf das Rechenrad 6 gerichteten Oberflächenströmung 12 erfaßt und treiben in kurzer Zeit auf das Rechenrad 6 zu. Die Geschwindigkeit der Oberflächenströmung 12 ist hierbei so gewählt, daß abhängig vom Material der Kunststoff-Schäume, deren Benetzungsgrad mit Tinte und der Dichte des Trennmediums 4 gerade vermieden wird, daß sich die Kunststoff-Schäume auf ihrem Weg von der Aufgabestelle 14 zum Rechenrad 6 mit Wasser vollsaugen können. Durch das rasche Abströmen der Kunststoff-Schäume in Richtung des Rechenrades 6 wird auch verhindert, daß die Wasseroberfläche 10 mit aufschwimmenden Kunststoff-Schäumen bedeckt ist und nachkommende schwerere Tintenpatronen-Partikel am Absinken gehindert werden. Anderersseits darf die Oberflächenströmung 12 nicht zu stark sein, damit die schwerere Sinkfraktion nicht mit abgetrieben wird. Je nach Art des Kunststoff-Schaums kann ein anderes Trennmedium 4 als Wasser verwendet und insbesondere die Dichte und die Strömungsgeschwindigkeit des Trennmediums 4 variiert werden, um ein Vollsaugen und Absinken des Kunststoff-Schaumes zu verhindern. Die auf das rotierende Rechenrad 6 zutreibenden Kunststoff-Schäume werden von dessen Rechen 16 aus dem Trennbehälter 2 zur Weiterbearbeitung befördert.

Die schwereren, nicht-schwimmfähigen Tintenpatronen-Partikel sinken als Sinkfraktion an den durch eine Trichteröffnung 18 gebildeten Boden des tricherförmigen Trennbehälters 2 ab. Da die Oberflächenströmung 12 nur in den oberen Schichten des Trennmediums 4 erzeugt wird, kann die Sinkfraktion weitgehend lotrecht und ungestört absinken. Die Trichteröffnung 18 des Trennbehälters 2 kommuniziert mit einem Zulauf eines Schneckenförderers 20, in welchen die Sinkfraktion absinkt, um abgefördert zu werden. Während des Absinkens geben die Tintenpatronen-Partikel einen weiteren Teil der an ihnen haftenden Tinte an das Wasser ab, so daß neben der Separation auch eine gleichzeitige Reinigung der Tintenpatronen-Partikel stattfindet.

Durch das der Schwimm-Sink-Trennung vorangehende teilweise Abtropfen von Tinte aus den Kunststoff-Schäumen in der Vibrations-Siebrinne wird erreicht, daß auch Kunststoffschäume, welche in hohem Maße mit Tinte vollgesogen sind, für eine Schwimm-Sink-Trennung schwimmfähig gemacht werden, da sie andernfalls wegen der höheren Dichte von Tinte gegenüber Wasser absinken würden. Das Vorsehen dieses Schrittes ist daher von Vorteil, wenn sich noch relativ viel Tinte in den Kunststoff-Schäumen befindet.

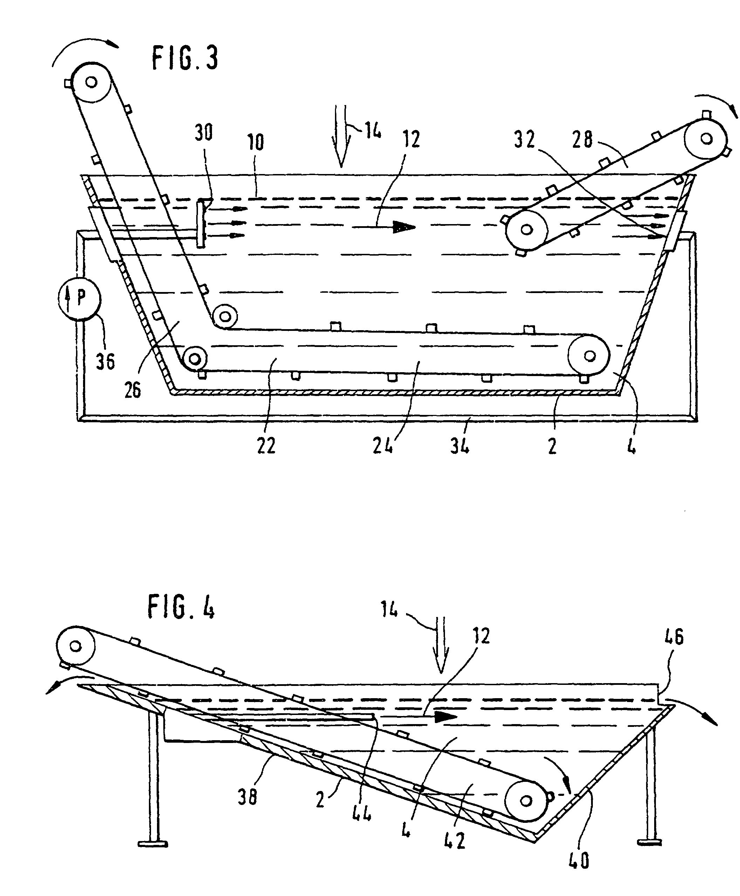

In Fig.3 ist eine weitere Ausführungsform der erfinderischen Vorrichtung dargestellt, wobei gleiche oder ähnliche Komponenten wie bei der bevorzugten Ausführungsform mit gleichen Bezugszahlen versehen sind. Der Austrag der Schwimm- und der Sinkfraktion erfolgt jeweils durch einen an sich bekannten Kratzboden 22,28. Der Kratzboden 22 zum Austrag der Sinkfraktion weist einen horizontalen Kratzboden-Teil 24, weicher im wesentlichen die gesamte Bodenfläche des Trennbehälters 2 bedeckt und einen an diesen anschließenden, geneigten Kratzboden-Teil 26 auf, welcher sich entlang der inneren Umfangsfläche der Umfangswand bis über den oberen Rand des Trennbehälters 2 erstreckt. Der Kratzboden 28 für den Austrag der Schwimmfraktion ist eben, am diametral gegenüberliegenden Rand des Trennbehälters 2 angeordnet und derart geneigt, daß ein Teil des Kratzbodens 28 in das Wasser zur Aufnahme der Schwimmfraktion eingetaucht ist und sich der andere Teil über den Rand des Trennbehälters 2 hinauserstreckt, um die Schwimmfraktion aus dem Trennbehälter 2 zu fördern.

Die Oberflächenströmung 12 wird bei dieser Ausführungsform durch Wasserdüsen 30 erzeugt, welche dicht unter der Wasseroberfläche 10 diametral gegenüber dem Kratzboden 28 zur Aufnahme der Schwimmfraktion angeordnet sind. Auf der den Wasserdüsen 30 gegenüberliegenden Seite des Trennbehälters 2 befindet sich an der Umfangswand eine Absaugeinrichtung 32, welche in Strömungsrichtung gesehen über eine Leitung 34 mit einer Pumpe 36 und daran anschließend mit den Wasserdüsen 30 verbunden ist, um eine Kreislaufströmung zu bilden. Hierbei bildet die Oberflächenströmung 12 innerhalb des Trennbehälters 2 von den Wasserdüsen 30 bis zur Absaugeinrichtung 32 einen freien Teil der Kreislaufströmung. Der Druck und die Menge des aus den Wasserdüsen 30 ausströmenden Wassers ist durch die Pumpe 36 einstellbar, wobei das Wasser aus den Wasserdüsen 30 kontinuierlich ausströmt oder pulsierend ausgestoßen werden kann.

Gemäß einer weiteren Ausführungsform, welche in Fig.4 dargestellt ist, hat der Trennbehälter 2 einen asymmetrisch rinnenförmigen Querschnitt, mit einer längeren Seitenwand 38 und einer kürzeren Seitenwand 40. Der Austrag der Sinkfraktion erfolgt über einen Kratzboden 42, welcher entlang der längeren Seitenwand 38 angeordnet ist. Zur Erzeugung der Oberflächenströmung 12 sind wiederum Düsen 44 vorgesehen, welche im Trennmedium 4 eine Oberflächenströmung 12 in Richtung eines Überlaufs 46 erzeugen, an welchem die Schwimmfraktion über den Rand des Trennbehälters 2 ausgetragen wird.

Die Erfindung ist nicht auf die drei beschriebenen Ausführungsformen beschränkt. Zum Austrag der Schwimmfraktion könnte auch ein Schneckenförderer eingesetzt werden, welcher quer zur Oberflächenströmung 12 angeordnet ist. Für den Austrag der Sinkfraktion kann z.B. auch ein Rechen Verwendung finden, welcher entlang des Bodens des Trennbehälters 2 translatorisch verfahren wird.

## Patentansprüche

1. Schwimm-Sink-Trennvorrichtung (1) zum Abtrennen von saug- und schwimmfähigem Material aus Stoffgemischen, wobei das saug- und schwimmfähige Material zumindest teilweise mit Flüssigkeit vollgesogenen ist, mit:
einer Vbrations-Siebrinne, um Restflüssigkeit aus dem saug- und schwimmfähigen Material zu entfernen;
einem Trennbehälter (2) zur Aufnahme des saug- und schwimmfähigen Materials von der Vibrations-Siebrinne, wobei der Trennbehälter (2) mit flüssigem Trennmedium (4) gefüllt ist und eine Strömungserzeugungseinrichtung (8; 30, 32, 34, 36; 44, 46) aufweist, um eine Oberflächenströmung (12) in dem Trennmedium (4) zu erzeugen und um das saug- und schwimmfähige Material als Schwimmfraktion von einer Aufgabestelle (14) des Stoffgemischs zu einer Ausgabestelle (6; 28; 46) für die Schwimmfraktion entlang der Oberfläche (10) des Trennmediums (4) derart schnell befördern, dass es im wesentlichen kein Trennmedium (4) aufsaugen kann; und
einem Mechanismus (6; 28; 46) zum Austrag der abgetrennten Schwimmfraktion aus dem Trennbehälter (2).

2. Schwimm-Sink-Trennvorrichtung (1) nach Anspruch 1, bei der die Strömungserzeugungseinrichtung motorisch angetriebene Propeller (8) umfasst, welche dicht unter der Oberfläche (10) des Trennmediums (4) angeordnet sind.

3. Schwimm-Sink-Trennvorrichtung (1) nach Anspruch 1, bei der die Strömungserzeugungseinrichtung Düsen (30; 44) umfast, welche dicht unter der Oberfläche (10) des Trennmediums (4) angeordnet sind und aus welchen Trennmedium (4) unter Druck kontinuierlich ausströmt oder pulsierend ausgestoßen wird.

4. Schwimm-Sink-Trennvorrichtung (1) nach einem der Ansprüche 1 bis 3, bei der der Mechanismus zum Austrag der Schwimmfraktion ein in das Trennmedium (4) teilweise eintauchendes, rotatorisch angetriebenes Rechenrad (6) beinhalten, um das als Schwimmfraktion abgetrennte saug- und schwimmfähige Material aus dem Trennbehälter (2) zu fördern.

5. Schwimm-Sink-Trennvorrichtung (1) nach einem der Ansprüche 1 bis 3, bei der der Mechanismus zum Austrag der Schwimmfraktion einen umlaufenden Kratzboden (28) beinhalten, welcher am Rand des Trennbehälters (2) angeordnet ist und teilweise in das Trennmedium (4) eintaucht.

6. Schwimm-Sink-Trennvorrichtung (1) nach einem der Ansprüche 1 bis 3, bei der der Mechanismus Austrag der Schwimmfraktion einen Überlauf (46) für das Trennmedium (4) aufweisen.

7. Schwimm-Sink-Trennvorrichtung (1) nach einem der Ansprüche 1 bis 6, bei der ein Mechanismus (20; 22; 42) zum Austrag der auf den Boden des Trennbehälters (2) abgesunkenen Sinkfraktion vorgesehen ist.

8. Schwimm-Sink-Trennvorrichtung (1) nach Anspruch 7, bei der sich der Boden des Trennbehälters (2) bis zu einer Trichteröffnung (18) hin trichterförmig verengt, welche mit einem Zulauf eines Schneckenförderers (20) kommunizierend verbunden ist, um die auf den Boden des Trennbehälters (2) abgesunkene Sinkfraktion wegzufördem.

9. Schwimm-Sink-Trennvorrichtung (1) nach Anspruch 9 oder 10, bei der der Mechanismus zum Austrag der Sinkfraktion einen in das Trennmedium (4) eingetauchten umlaufenden Kratzboden (22) aufweist, welcher sich vom Boden des Trennbehälters bis über dessen Rand hinaus erstreckt.

10. Verfahren zum Abtrennen von saug- und schwimmfähigem Material aus Stoffgemischen, wobei das saug- und schwimmfähige Material zumindest teilweise mit Flüssigkeit vollgesogenen ist, mit folgenden Schritten:
Entfernen von Restflüssigkeit aus dem saug- und schwimmfähigen Material;
Einbringen des saug- und schwimmfähigen Materials in einen Trennbehälter (2), wobei der Trennbehälter (2) mit flüssigem Trennmedium (4) gefüllt ist;
Erzeugen einer Oberflächenströmung (12) in dem Trennmedium (4), um das saug-und schwimmfähige Material als Schwimmfraktion von einer Aufgabestelle (14) des Stoffgemischs zu einer Ausgabestelle (6; 28; 46) für die Schwimmfraktion entlang der Oberfläche (10) des Trennmediums (4) derart schnell befördern, dass es im wesentlichen kein Trennmedium (4) aufsaugen kann; und
Entfernen der abgetrennten Schwimmfraktion aus dem Trennbehälter (2).

11. Verfahren nach Anspruch 10, bei dem die Oberflächenströmung (12) durch motorisch angetriebene Propeller (8) erzeugt wird.

12. Verfahren nach Ansprüche 10, bei dem die Oberflächenströmung durch Düsen (30: 44) erzeugt wird, welche dicht unter der Oberfläche (10) des Trennmediums (4) angeordnet sind und aus welchen Trennmedium (4) unter Druck kontinuierlich ausströmt oder pulsierend ausgestoßen wird.

## Claims

1. Float-sink-separation device (1) for separating absorbent and floatable material from mixtures of substances, wherein the absorbent and floatable material is at least partially soaked with liquid, comprising:
a vibration sieve channel for removing residual liquid from the absorbent and floatable material;
a separation container (2) for receiving the absorbent and floatable material from the vibration sieve channel, wherein the separation container (2) is filled with a liquid separation medium (4) and comprises a flow-generation means (8; 30, 32, 34, 36; 44, 46) in order to generate a surface flow (12) in the separation medium (4) and to transport the absorbent and floatable material as a floating fraction from an input location (14) of the mixture of substances to an output location (6; 28; 46) for the floating fraction along the surface (10) of the separation medium (4) so fast that it can basically not absorb any separation medium (4); and
a mechanism (6; 28; 46) for discharging the separated floating section from the separation container (2).

2. Float-sink-separation device (1) of claim 1, wherein the flow-generation means includes motory-driven propellers (8), which are arranged directly below the surface (10) of the separation medium (4).

3. Float-sink-separation device (1) of claim 1, wherein the flow generation means includes nozzles (30; 44), which are arranged directly below the surface (10) of the separation medium (4) and from which a separation medium (4) continuously streams out under pressure or is ejected in a pulsating way.

4. Float-sink-separation device (1) of one of claims 1 to 3, wherein the mechanism for discharging the floating fraction includes a rotary-driven rake wheel partially immersing into the separation medium (4) in order to feed the absorbent and floatable material separated as the floating fraction from the separation container (2).

5. Float-sink-separation device (1) of one of claims 1 to 3, wherein the mechanism for discharging the floating fraction includes a circulating scrape bottom (28) arranged at the border of a separation container (2) and partially immersing into the separation medium (4).

6. Float-sink-separation device (1) of one of claims 1 to 3, wherein the mechanism comprises an overflow (46) for the separation medium (4) for the discharge of the floating fraction.

7. Float-sink-separation device (1) of one of claims 1 to 6, wherein a mechanism (20; 22; 42) is provided for discharging the sink fraction, which sunk to the bottom of the separation container (2).

8. Float-sink-separation device (1) of claim 7, wherein the bottom of the separation container (2) is tapered to a funnel opening (18) in a funnel shape, which is connected to an inlet of a screw conveyor (20) in a communicating way, in order to feed the sink fraction sunk to the bottom of the separation container (2) away.

9. Float-sink-separation device (1) of claims 9 or 10, wherein the mechanism for discharging the sink fraction comprises a circulating scrape bottom (22) immersed into the separation medium (4) extending out from the bottom of the separation container beyond its rim.

10. Method for separating absorbent and floatable material from mixtures of substances, wherein the absorbent and floatable material is at least partially soaked with a liquid, comprising the following steps:
removing residual liquid from the absorbent and floating material;
introducing the absorbent and floating material into a separation container (2), wherein the separation container (2) is filled with a liquid separation medium (4);
generating a surface flow (12) within the separation medium (4) in order to transport the absorbent and floatable material as a floating fraction from the input location (14) of the mixture of substances to an output location (6; 28; 46) for the floating fraction along the surface (10) of the separation medium (4) so fast that it can basically not absorb any separation medium (4); and
removing the separated floating fraction from the separation container (2).

11. Method of claim 10, wherein the surface flow (12) is generated by motory-driven propellers (8).

12. Method of claim 10, wherein the surface flow is generated by nozzles (30; 44), which are arranged directly below the. surface (10) of the separation medium (4) and from which a separation medium (4) is continuously expelled under pressure or is ejected in a pulsating way.

## Revendications

1. Dispositif de séparation densimétrique en milieu liquide (1) pour qu'un matériau absorbant et flottant soit séparé de mélanges de substances, où le matériau absorbant et flottant est au moins partiellement saturé de liquide, comprenant :
- une goulotte de tamis à vibrations, pour éliminer le liquide résiduel du matériau absorbant et flottant ;
- un récipient de séparation (2) servant à recevoir le matériau absorbant et flottant provenant de la goulotte du tamis à vibrations, où le récipient de séparation (2) est rempli d'un milieu séparateur liquide (4) et présente un dispositif de production d'écoulement (8 ; 30, 32, 34, 36 ; 44, 46), pour produire un écoulement de surface (12) dans le milieu séparateur (4) et pour transporter le matériau absorbant et flottant, sous forme de fraction flottante, depuis un point de distribution (14) du mélange de substances jusqu'à un point de sortie (6 ; 28 ; 46) pour la fraction flottante, le long de la surface (10) du milieu séparateur (4), de manière si rapide que le matériau absorbant et flottant ne puisse absorber pratiquement aucun milieu séparateur (4) ; et
- un mécanisme (6 ; 28 ; 46) permettant que la fraction flottante séparée soit évacuée du récipient de séparation (2).

2. Dispositif de séparation densimétrique en milieu liquide (1) selon la revendication 1, dans lequel le dispositif de production d'écoulement comprend des hélices (8) entraînées par un moteur, lesquelles hélices sont disposées de façon étanche sous la surface (10) du milieu séparateur (4).

3. Dispositif de séparation densimétrique en milieu liquide (1) selon la revendication 1, dans lequel le dispositif de production d'écoulement comprend des buses (30 ; 44) qui sont disposées de façon étanche sous la surface (10) du milieu séparateur (4) et à travers lesquelles le milieu séparateur (4) s'écoule en continu, sous pression, ou bien est évacué de manière pulsée.

4. Dispositif de séparation densimétrique en milieu liquide (1) selon l'une quelconque des revendications 1 à 3, dans lequel le mécanisme servant à évacuer la fraction flottante comprend une roue à râteaux (6) entraînée de façon rotationnelle et plongeant partiellement dans le milieu séparateur (4), pour que le matériau absorbant et flottant, séparé en tant que fraction flottante, soit transporté en dehors du récipient de séparation (2).

5. Dispositif de séparation densimétrique en milieu liquide (1) selon l'une quelconque des revendications 1 à 3, dans lequel le mécanisme servant à évacuer la fraction flottante comprend une raclette rotative (28) qui est disposée au bord du récipient de séparation (2) et plonge partiellement dans le milieu séparateur (4).

6. Dispositif de séparation densimétrique en milieu liquide (1) selon l'une quelconque des revendications 1 à 3, dans lequel le mécanisme servant à l'évacuation de la fraction flottante présente une surverse (46) pour le milieu séparateur (4).

7. Dispositif de séparation densimétrique en milieu liquide (1) selon l'une quelconque des revendications 1 à 6, dans lequel il est prévu un mécanisme (20 ; 22 ; 42) servant à évacuer la fraction immergée et déposée sur le fond du récipient de séparation (2).

8. Dispositif de séparation densimétrique en milieu liquide (1) selon la revendication 7, dans lequel le fond du récipient de séparation (2) se rétrécit en forme d'entonnoir jusqu'à une ouverture d'entonnoir (18) qui est reliée, de façon communicante, à une alimentation d'un transporteur à vis (20), pour enlever par transport la fraction immergée et déposée sur le fond du récipient de séparation (2).

9. Dispositif de séparation densimétrique en milieu liquide (1) selon la revendication 7 ou 8, dans lequel le mécanisme servant à évacuer la fraction immergée présente une raclette rotative (22) immergée dans le milieu séparateur (4), laquelle raclette s'étend depuis le fond du récipient de séparation et dépasse de son bord.

10. Procédé permettant qu'un matériau absorbant et flottant soit séparé de mélanges de substances, où le matériau absorbant et flottant est saturé au moins partiellement de liquide, comprenant les étapes suivantes consistant :
- à éliminer le liquide résiduel du matériau absorbant et flottant ;
- à introduire le matériau absorbant et flottant dans un récipient de séparation (2), où le récipient de séparation (2) est rempli d'un milieu séparateur liquide (4) ;
- à produire un écoulement de surface (12) dans le milieu séparateur (4), pour transporter le matériau absorbant et flottant, sous forme de fraction flottante, depuis un point de distribution (14) du mélange de substances jusqu'à un point de sortie (6 ; 28 ; 46) pour la fraction flottante, le long de la surface (10) du milieu séparateur (4), de manière si rapide que le matériau absorbant et flottant ne puisse absorber pratiquement aucun milieu séparateur (4) ; et
- à faire en sorte que la fraction flottante séparée soit évacuée du réservoir de séparation (2).

11. Procédé selon la revendication 10, dans lequel l'écoulement de surface (12) est produit par des hélices (8) entraînées par un moteur.

12. Procédé selon la revendication 10, dans lequel l'écoulement de surface est produit par des buses (30 ; 44) qui sont disposées de façon étanche sous la surface (10) du milieu séparateur (4) et à travers lesquelles un milieu séparateur (4) s'écoule en continu, sous pression, ou bien est évacué de manière pulsée.
